# EUROPÄISCHE PATENTANMELDUNG

(11) **EP 1 541 610 A1**
(43) Veröffentlichungstag der Anmeldung: **15.06.2005**
(21) Anmeldenummer: 04023470.0
(22) Anmeldetag: 01.10.2004
(51) Int. Cl.: C08G 59/50, C08G 59/54, C08G 59/66, C08G 59/40, C08G 59/68

(54) **Zweikomponentige Klebstoffe für den Fahrzeugbau**

(30) Priorität: 09.12.2003 DE 10357355
(71) Anmelder: Henkel Kommanditgesellschaft auf Aktien, 40589 Düsseldorf (DE)
(72) Erfinder: Müller, Mathias, 67256 Weisenheim (DE)

(57) **Zusammenfassung**

Es werden zweikomponentige Epoxidharz-Zusammensetzungen beschrieben, bei denen die Epoxy-Komponente A mindestens ein Epoxidharz mit einer Epoxy-Funktionalität größer als 1 enthält und als zweite Komponente B eine flüssige oder pastöse Härterkomponente enthaltend Amine, Polyaminoamide, Mannich-Basen oder Mercaptogruppen-haltige Verbindungen verwendet wird, die zusätzlich einen nichtflüchtigen und nicht korrosiven Beschleuniger enthält. Hierdurch lassen sich diese Klebstoffe sowohl im Automobilrohbau als auch im allgemeinen Fahrzeugbau einsetzen, es wird eine rasche Handhabungsfestigkeit erzielt und Bauteilverzüge werden vermieden. Die Klebstoffe können dabei sowohl bei Raumtemperatur zu ihrer Endfestigkeit aushärten, alternativ kann die Endfestigkeit wird durch Aushärtung im üblichen Lackofen durch thermische Härtung beschleunigt werden, ohne das die mechanischen Eigenschaften der Klebung negativ beeinflusst werden.

## Beschreibung

Die vorliegende Erfindung betrifft Epoxy-Zusammensetzungen, die als Klebstoff im Fahrzeugbau eingesetzt werden können, fernerhin betrifft die vorliegende Erfindung ein Verfahren zum Verkleben von Fahrzeugbauteilen.

Im Fahrzeugbau werden Bauteile, insbesondere metallische Bauteilen, im zunehmenden Umfang durch Kleben gefügt. In Karosserierohbau werden hierfür vorzugsweise einkomponentige Klebstoffe auf die Bauteile aufgetragen, anschließend werden diese Bauteile gefügt. Die derart zusammengebaute Rohkarosse durchläuft in der Folge eine Reihe von Prozessbädern wie Tauchoder Spritzprozesse zur Entfettung, Phosphatierung und zur kathodischen Tauchlackierung (KTL). Erst nach der kathodischen Tauchlackierung wird bei den gängigen bisherigen Verfahren ein heißhärtender einkomponentiger Klebstoff im "KTL-Ofen" thermisch ausgehärtet, hierzu stehen bei den üblichen Prozessen etwa 30 min bei Temperaturen von etwa 180°C zur Verfügung. Aus diesem Produktionsablauf ergibt sich, daß der Klebstoff beim Durchlauf durch die wässrigen Behandlungsprozesse noch nicht gehärtet ist. Da die wässrigen Medien zum Teil mit erheblichem Druck - sei es der Spritzdruck der Applikation oder der Staudruck des Behandlungsbades - auf die Karosserieteile einwirken, besteht die Gefahr, daß ein nicht ausgehärteter Klebstoff ganz oder teilweise ausgewaschen wird und seine Funktion somit nicht erfüllen kann. Weiterhin kann dieser ausgewaschene Klebstoff zur einer Verunreinigung der Vorbehandlungsbäder führen und im weiteren Lackierprozess zu erheblichen Lackstörungen führen.

Zur Eliminierung derartiger Auswaschprobleme wird bisher der Klebstoff vorgehärtet oder vorgeliert. Dies geschieht entweder durch induktive Erwärmung der gefügten Bauteile oder durch den Durchlauf der Karosse oder der Bauteile durch einen speziellen "Rohbauofen" bei ca. +120°C für ca. 12 min..

Insbesondere bei der Mischbauweise aus unterschiedlichen Werkstoffen (unterschiedliche Metalle, z.B. Stahlblech- und Aluminiumbauteile oder auch faserverstärkte Kunststoffe wie SMC-Bauteile) kommt es bei dieser thermischen Vorhärtung oder Vorgelierung zu Bauteilverzug und Verwerfungen durch die unterschiedliche Ausdehnung der Werkstoffe. Die nur lokale Aufheizung der Bauteile bei der Induktionsheizung führt besonders häufig zum Bauteileverzug. Weiterhin ist die Installation von Induktionsanlagen notwendig, die störanfällig sind. Auch die Installation eines Rohbauofens bedeutet erheblichen Energie-, Platz- und Investitionsbedarf.

Sowohl für Klebungen von Bauteilen in späteren Fertigungsschritten des Fahrzeugsbaus, wie z.B. in der Endmontage, dem sogenannten "Trim-shop" nach den Lackierungsschritten als auch insbesondere bei der Fahrzeugreparatur steht jedoch keine ausreichend hohe Prozeßtemperatur zur Verfügung, um einkomponentig hitzehärtende Klebstoffe vollständig auszuhärten. Die bisher bekannten, bei Raumtemperatur vollständig aushärtbaren zweikomponentigen Klebstoffe haben eine Reihe von Nachteilen. Bei Einsatz auf geölten Blechteilen zeigen sie in der Regel eine völlig unzureichende Haftung und Alterung auf den im Fahrzeugbau verwendeten geölten Blechen. Zum anderen ist die Aushärtungsgeschwindigkeit bei Raumtemperatur unbefriedigend lange. Bisher sind zur Lösung dieses Problems entweder Erwärmungszeiten und Temperaturen vorgeschlagen worden, die vergleichbar sind den Härtungsbedingungen von einkomponentig hitzehärtenden Systemen. Alternativ werden Härter und/oder Beschleuniger vorgeschlagen, die entweder arbeitshygienisch bedenklich sind wie z.B. hochreaktive, niedermolekulare aliphatische Diamine oder korrosive Bestandteile enthalten wie Lewis-Säuren vom Typ der komplexen Borhalogenide. Ein weiterer Nachteil derartiger hochbeschleunigter zweikomponentiger Epoxidsysteme ist deren sehr begrenzte Topfzeit, d.h. der Zeitraum der zwischen Mischung der zwei Komponenten und dem spätesten Zeitpunkt des Fügens der Bauelemente zur Verfügung steht.

Bisher bekannte hochfeste Epoxy-Strukturklebstoffe für den Automobilrohbau mit guter Haftung auf geölten Substraten waren daher ausschließlich wärmehärtende Systeme, die in der Regel einen Vorgelierungsschritt erforderlich machen. So beschreibt EP 101964 A einen pastösen, hitzehärtenden Epoxy-Klebstoff, der durch Vinylacetatpolymere oder -Copolymere modifiziert ist und dadurch bei verhältnismäßig niedrigen Temperaturen vorgeliert werden kann, um eine ausreichende Auswaschbeständigkeit gegen die vorgenannten wässrigen Prozeßflüssigkeiten zu gewährleisten.

In ähnlicher Weise beschreibt EP 558798 eine Epoxidharz-Zusammensetzung enthaltend Epoxidharze, hitzeaktivierbare Härter und ein Polymerpulver auf der Basis eines aromatischen thermoplastischen Polymers mit einer Glasübergangstemperatur von 120°C oder mehr, das in der KlebstoffZusammensetzung als separate Phase vorliegt. Obwohl derartige thermoplastische Polymere enthaltende Epoxidharz-Zusammensetzungen bei relativ niedriger Temperatur vorgeliert werden können, wird in der Fertigungslinie eine zusätzliche Wärmequelle benötigt, mit deren Hilfe diese Vorgelierung vorgenommen werden kann.

WO 92/18575 schlägt ein Hybrid-Bindemittelsystem vor, enthaltend eine Mischung aus einem Acrylat und Epoxid-Bindemittel in Kombination mit einem tri- oder tetrafunktionellen Ketimin als Härtungsagens. Diese Klebstoffzusammensetzung ermöglicht eine zweistufige Aushärtung bei der in einer ersten Stufe der Klebstoff feuchtigkeitshärtend ist um eine Anfangsfestigkeit zu erzielen. In einer zweiten Stufe soll der Klebstoff dann bei erhöhten Temperaturen zur Endfestigkeit ausgehärtet werden. Obwohl die Feuchtigkeitshärtung keine zusätzliche Wärmequelle im Rohbaubereich erfordert, hat dieses System den Nachteil der sehr langsamen Feuchtigkeitshärtung, insbesondere bei den im Rohbau üblichen nicht porösen und nicht feuchtigkeitsdurchlässigen Substraten, so daß eine brauchbare Anfangsfestigkeit erst nach etlichen Stunden oder Tagen der Feuchtigkeitsexposition erzielt wird.

WO 96/11240 beschreibt ebenfalls einen Strukturklebstoff mit einem doppelten Härtungsmechanismus. Diese Schrift schlägt vor, eine Kombination eines isocyanathaltigen Härtungsmittels mit einer Hydroxylgruppen-haltigen Komponente einzusetzen, die bei Raumtemperatur zunächst zu einem Haftklebstoff reagieren, der dann bei Temperaturen von mindestens 100°C als Strukturklebstoff aushärtet. Angaben über die Haftungseigenschaften auf ölhaltigen Substraten werden in dieser Schrift nicht gemacht.

EP 1186642 A1 beschreibt zweikomponentige Zusammensetzungen für die Unterfütterung, Bördelnahtverklebung und Abdichtung von Karosserieabschnitten, insbesondere für die Bördelnahtversiegelung von Fahrzeuganbauteilen. Es wird angegeben, daß die zweikomponentigen Systeme innerhalb der vorgegebenen Taktzeiten die für die Montage der Anbauteile an die Karosserie erforderliche Grifffestigkeit erzielen und die für den Fertigungsprozess und den Durchgang durch das KTL-Bad erforderliche Festigkeit und Maßhaltigkeit aufgrund der zweifachen Vernetzung erreichen. Diese Schrift schlägt vor, eine UV-induzierte Reaktion zur Vorvernetzung bis zur Transportfähigkeit einzusetzen. Nachteilig bei einer derartigen fotochemisch ausgelösten Vorvernetzung ist es, daß Klebstoffbereiche, die für die UV-Strahlung unzugänglich sind, d.h. im Inneren der Klebefuge, unvollständig zur Reaktion gebracht werden. Außerdem werden UV-Strahlungsquellen in der Rohbaulinie benötigt, um die UV-Härtung auszulösen.

WO 96/09352 beschreibt einen zweikomponentigen Epoxy-Strukturklebstoff, bei dem die erste Komponente ein Amin-Härtungsagens und einen Katalysator beinhaltet und die zweite Komponente ein Epoxidharz mit einer durchschnittlichen Epoxy-Funktionalität größer als 1 enthält. Dabei soll die Härterkomponente Calciumsalze der Salpetersäure, der Trifluormethansulfonsäure, der Perchlorsäure, der Tetrafluoroborsäure oder der Hexafluoroantimonsäure enthalten. Trotz dieser Katalysatoren schlägt diese Schrift vor, die zweikomponentigen Klebstoffzusammensetzung durch Erwärmen auf Temperaturen zwischen 50 und 200°C auszuhärten.

In ähnlicher Weise schlägt EP 705316 B1 zweikomponentige Epoxid-Klebstoff-Zusammensetzungen vor, die als Beschleuniger in der Härterkomponente Derivate der Pentafluoroantimonsäure enthält. Auch diese Schrift schlägt vor, zur Erzielung einer kurzen Handhabungsfestigkeit die geklebten Bauteile für kurzzeitig, beispielsweise durch Induktionsheizung zu erhitzen.

Weiterhin ist es bekannt, die Härtung von zweikomponentigen Epoxid-Klebstoffzusammensetzungen durch Zusatz von kurzkettigen mehrfunktionellen Aminen wie Diethylentriamin oder Triethylentetramin oder auch tertiären Aminen wie Dimethylethanolamin oder Dimethylpropanolamin zu beschleunigen. Zur Beschleunigung weiterhin bekannt sind Zusätze von 2,4,6-Tris-dimethylaminophenol, Isopropylendiphenol, Vinylphenol, Benzylalkohol oder Piperazinderivaten wie Aminoethylpiperazin. Derartige Zusätze zu Polyaminen als Härterkomponente in Epoxidsystemen beeinflussen die mechanischen Eigenschaften der ausgehärteten Klebung negativ, insbesondere neigen derartige Klebstoffzusammensetzungen zur Versprödung und Verschlechterung der Tieftemperaturschlagfestigkeit.

Angesichts dieses Standes der Technik haben sich die Erfinder die Aufgabe gestellt, zweikomponentige Epoxidharz-Klebstoffzusammensetzungen bereit zu stellen, die in ihren mechanischen Eigenschaften den hervorragenden Endeigenschaften der einkomponentig hitzehärtbaren Epoxidharz-Klebstoffzusammensetzungen ebenbürtig sind. Dabei sollen die Verklebung möglichst kurz nach dem Klebstoffauftrag und dem Fügen der Bauteile eine ausreichende Handhabungsfestigkeit aufweisen.

Die erfindungsgemäße Lösung der Aufgabe ist den Patentansprüchen zu entnehmen.
Sie besteht im Wesentlichen in der Bereitstellung von zweikomponentigen Epoxidharz-Zusammensetzungen, bei denen die Epoxid-Komponente A mindestens ein Epoxidharz mit einer Epoxy-Funktionalität von größer 1 enthält und die Härterkomponente B flüssig oder pastös ist und Amine, Polyamide, Mannich-Basen oder mercaptogruppenhaltige Verbindungen enthält und zusätzlich mindestens einen Beschleuniger enthält, der ausgewählt ist aus der Gruppe Dicyandiamid, Guanamine, Guanidine, Aminoguanadine, feste aromatische Diamine oder deren Mischungen.

Ein weiterer Gegenstand der vorliegenden Erfindung ist ein Verfahren zum Kleben von Karosseriebauteilen mit den folgenden wesentlichen Verfahrensschritten:
a) Mischen der Epoxy-Komponente (A) mit der Härterkomponente (B) in einem Verhältnis innerhalb der stöchiometrisch erforderlichen Menge,
b) anschließend wird diese Mischung auf mindestens eine zu klebende Substratoberfläche aufgebracht,
c) die Bauteile werden gefügt, hieran schließt sich unmittelbar die Teilhärtung des Klebstoffgemisches in der Klebefuge bei Raumtemperatur an,
d) ggf. können sich weitere Produktionsprozesse anschließen, insbesondere wenn der Klebstoff im Rohbau eingesetzt wird, können sich Reinigungsschritte der Karosserieteile, wie Phosphatieren der Metalloberfläche, Elektrotauchlackieren der metallischen Oberfläche anschließen, bei der Verwendung in der Endmontage oder im Fahrzeugreparaturfall entfallen diese weiteren Produktionsprozesse und
e) das vollständige Aushärten der Klebung erfolgt bei Raumtemperatur, bei Einsatz im Rohbau kann die Aushärtung jedoch auch im Ofen für die Elektrotauchlackierung bei Temperaturen zwischen 130 und 200°C erfolgen.

Als Epoxidharze für die Komponente A) eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Ebenfalls geeignet sind Diglycidylether von ethoxyliertem Resorcin (DGER), z.B. von der Fa. Indspec.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglycol, Triethylenglycol, 1,2-Propylenglykol, 1,4-Butylenglykol, Triethylenglycol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Die bei Raumtemperatur flüssigen Epoxidharze haben in der Regel ein Epoxid-Äquivalentgewicht von 150 bis etwa 220, besonders bevorzugt ist ein Epoxi-Äquivalentgewichtbereich von 182 bis 192.

Weiterhin kann die Epoxy-Komponente A) zusätzlich ein weiteres modifiziertes Epoxidharz enthalten, das der ausgehärteten Verklebung verbesserte Schlagfestigkeit und Tieftemperatureigenschaften verleiht. Derartige Zusätze sind an sich bekannt, es handelt sich hierbei um Umsetzungsprodukte von Epoxidharzen mit einer Epoxy-Funktionalität größer 1 mit carboxy-funktionellen Kautschuken, Dimerfettsäuren oder Kern/Schale Polymeren, deren Kern eine Glasübergangstemperatur unterhalb von -30°C aufweist. Dabei wird das Epoxidharz im stöchiometrischen Überschuss eingesetzt und ein Epoxyfunktionelles Reaktionsprodukt entsteht. Der Überschuß an Epoxidharz kann weit über den stöchiometrischen Überschuß erfolgen. Epoxy-Funktionalität größer 1 für die Epoxidharze bedeutet dabei, daß die Verbindungen mehr als eine, vorzugsweise mindestens 2, 1,2-Epoxy-Gruppen pro Molekül aufweisen. Vorzugsweise werden für diese modifizierten Epoxidharze Polyepoxide mit einem Epoxid-Äquivalent zwischen 150 und 4000 eingesetzt. In gleicher Weise wie mit den vorgenannten carboxy-funktionellen Modifikatoren können die verwendbaren modifizierten Epoxidharze durch Umsetzung von niedermolekularen Epoxidharzen mit einer Epoxy-Funktionalität größer 1 mit aminoterminierten Polyethern, di- oder höher funktionellen Alkyl-, Aryl- oder Alkylarylaminen, ebenfalls im stöchiometrischen Überschuß, erhalten werden.

Beispiele für derartige modifizierte sind die an sich bekannten Addukte aus Carboxyl-terminierten Butadien-Acrylnitril-Copolymeren (CTBN) und flüssigen Epoxidharzen auf der Basis des Diglycidylethers vom Bisphenol A. Konkrete Beispiele sind die Umsetzungsprodukte der Hycar CTBN 1300 X8, 1300 X13 oder 1300 X15 der Firma Noveon, Inc. mit flüssigen Epoxidharzen. Weiterhin lassen sich auch die Umsetzungsprodukte von aminoterminierten Polyalkylenglycolen (Jeffamine) mit einem Überschuß an flüssigen Polyepoxiden einsetzen. Die letztgenannten Umsetzungsprodukte sind beispielsweise in der WO 93/00381 offenbart. Grundsätzlich können auch Umsetzungsprodukte von Mercapto-funktionellen Prepolymeren oder flüssigen Thiokol-Polymeren mit einem Überschuß an Polyepoxiden als flexibilisierende Epoxidharze erfindungsgemäß eingesetzt werden. Weiterhin eignen sich in bevorzugter Weise die Umsetzungsprodukte von polymeren Fettsäuren, insbesondere der Dimerfettsäure mit Epichlorhydrin, Glycidol oder insbesondere Diglycidylether des Bisphenols A (DGBA).

Weiterhin sind als Modifizierungsmittel für die modifizierten Epoxidharze auch die aus der US-A-5 290 857 bzw. aus der US-A-5 686 509 bekannten Kern/Schale-Polymeren geeignet. Dabei sollen die Kernmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei aus Copolymeren aufgebaut, die eine Glasübergangstemperatur von mindestens +60°C hat. Die Schale ist vorzugsweise aus niederen Alkylacrylat- oder Methacrylat-Monomereinheiten (Methyl- bzw. Ethylester) sowie polaren Monomeren wie (Meth)acrylnitril, (Meth)acrylamid, Styrol und/oder radikalisch polymerisierbaren ungesättigten Carbonsäuren oder Carbonsäureanhydriden aufgebaut.

Weiterhin eignen sich als modifizierte Epoxidharze für die erfindungsgemäßen Epoxy-Komponenten A die in der WO 01/94492 Seite 10 bis 14 offenbarten Umsetzungsprodukte von Polycarbonsäureanhydriden mit mehrfunktionellen aminoterminierten oder hydroxyterminierten Polymeren und deren anschließenden Umsetzung mit einem großen stöchiometrischen Überschuß an Epoxidharzen.

In ähnlicher Weise lassen sich als modifizierte Epoxidharze die in der WO 00/20483 auf Seite 8 bis 12 offenbarten Reaktionsprodukte aus einem Di- oder Polyamin mit einem Carbonsäureanhydrid und einem Polyphenol oder Aminophenol sowie deren Umsetzung mit einem stöchiometrischen Überschuß eines niedermolekularen Polyepoxids erfindungsgemäß mit verwenden.

Ein weiterer Bestandteil der Epoxy-Komponente A können Reaktivverdünner sein. Reaktive Verdünner im Sinne dieser Erfindung sind Epoxidgruppen enthaltende, niederviskose Substanzen (Glycidylether oder Glycidylester) mit aliphatischer oder aromatischer Struktur. Diese Reaktivverdünner dienen einerseits zur Viskositätserniedrigung des Bindemittel-Systems oberhalb des Erweichungspunktes, andererseits werden sie bei der Aushärtung mit in das Bindemittelsystem eingebunden. Typische Beispiele für erfindungsgemäß einzusetzende Reaktivverdünner sind Mono-, Di- oder Triglycidylether von C6-bis C14- Monoalkoholen oder Alkylphenolen sowie die Monoglycidylether des Cashewnuß-Schalenöls, Diglycidylether des Ethylenglycols, Diethylenglycols, Triethylenglycols, Tetraethylenglykols, 1,2-Propylenglycols, 1,4-Butylenglycols, 1,5-Pentandiols, 1,6-Hexandiols, Cyclohexandimethanols, Triglycidylether des Trimethylolpropans sowie die Glycidylester von C6- bis C24- Carbonsäuren oder deren Mischungen.

Die Härterkomponente B ist erfindungsgemäß eine flüssige oder pastöse Komponente, die die Härtung der erfindungsgemäßen zweikomponentigen Epoxidharz-Klebstoffzusammensetzung bei Raumtemperatur auslösen soll. Die reaktiven Bestandteile der Komponente umfassen schwerflüchtige tertiäre Amine, Diamine, Polyamine, Polyaminoamide, Mannich-Basen oder mercaptangruppenhaltige Verbindungen sowie ggf. Mischungen der vorgenannten reaktiven Bestandteile. Weiterhin eignen sich Polyetheramine, insbesondere Polyoxyethylendiamine, Polyoxyethylentriamine, Polyoxypropylendiamine oder Polyoxypropylentriamine (auch bekannt unter dem Handelsnamen "Jeffamine" der Firma Huntsman) oder Polyoxytetramethylendiamin als Reaktivbestandteil der Härterkomponente. Weiterhin können sogenannte Mannich-Basen als Härterkomponente eingesetzt werden. Die für die erfindungsgemäßen Zusammensetzungen geeigneten Mannich-Basen sind dabei Kondensationsprodukte aus Di- oder Polyaminen mit aktiven Wasserstoff-Komponenten wie Aldehyden, Ketonen, Estern oder Aromaten (z.B. Phenolen) bzw. Heteroaromaten. Gegebenenfalls können diese Mannich-Basen oder auch die vorgenannten Polyamine Alkylphenole als Reaktionsbeschleuniger gelöst enthalten. Weiterhin eignen sich als Reaktivbestandteil der Härterkomponente flüssige Mercaptofunktionelle Prepolymere oder flüssige Polysulfide vom Typ der Thiokol-Polymeren. Insbesondere geeignet sind Polyaminoamide, die in bekannter Weise durch Kondensation von dimeren oder polymeren Fettsäuren mit niedermolekularen Alkylendiaminen oder cycloaliphatischen Diaminen hergestellt werden.

Als Beschleuniger für die Härter - Komponente können Guanidine, substituierte Guanidine, substituierte Harnstoffe, Melaminharze, Guanamin-Derivate, cyclische tertiäre Amine, aromatische Amine und/oder deren Mischungen eingesetzt werden. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanguanidin (Dicyandiamid).

Die Konzentration des Beschleunigers, insbesondere des Dicyandiamids in der Härterkomponente kann die Härtungsgeschwindigkeit des erfindungsgemäßen zweikomponentigen Klebstoffs in weiten Grenzen beeinflussen, ohne daß die mechanischen Eigenschaften oder die Haftungseigenschaften der KlebstoffZusammensetzung negativ beeinflusst werden.

In einer alternativen Ausführungsform kann der Beschleuniger auch in der A Komponente vorhanden sein, sofern er , wie z.B. das Dicyandiamid, bei der Lagertemperatur des Klebstoffes praktisch unlöslich in der A-Komponente ist und erst bei Zumischen der B-Komponente oder beim Erwärmen der Mischung der Komponenten löslich wird.

Typischer Weise enthält die Härterkomponente B 0,1 bis 10 Gew.-%, vorzugsweise zwischen 1 und 5 Gew.-% an Beschleuniger, besonders bevorzugt wird Dicyandiamid als Beschleuniger verwendet.

Sowohl die Epoxy-Komponente A als auch die Härter Komponente B können dabei noch zusätzlich Füllstoffe und weitere Hilfs- und Zusatzmittel enthalten.

Als Füllstoffe eignen sich zum Beispiel die diversen gemahlenen oder gefällten Kreiden, Ruß, Calcium-Magnesiumcarbonate, Schwerspat sowie insbesondere silikatische Füllstoffe vom Typ des Aluminium-Magnesium-Calcium-Silicats, z. B. Wollastonit, Chlorit.

Weiterhin können die erfindungsgemäßen Klebstoffzusammensetzungen in beiden Komponenten gängige weitere Hilfs- und Zusatzmittel wie z. B. Weichmacher, Rheologie-Hilfsmittel - beispielhaft erwähnt seien pyrogene Kieselsäuren, Bentonite, Fasern, gefällte Kreiden oder Ruß - Netzmittel, Entlüftungsmittel, Tenside, Alterungsschutzmittel, Stabilisatoren und/oder Korrosionsschutz- oder Farbpigmente enthalten.

Die Zusammensetzung der Härterkomponente B in Bezug auf ihre Reaktivenbestandteile wird dabei so gewählt, daß einfache Mischungsverhältnisse angewendet werden können, vorzugsweise wird dabei das Verhältnis der aktiven Bestandteile so gewählt, daß Mischungsverhältnisse von A zu B wie 5:0 bis 0,5:1, insbesondere 1:1 gewählt werden können. Dieses Verhältnis läßt sich zum einen durch die Auswahl der einzusetzenden Reaktivbestandteile der Härterkomponente B in weiten Grenzen frei wählen, zusätzlicher Gestaltungsspielraum wird durch Zumischen von inerten Bestandteilen wie Weichmachern, Füllstoffen oder Rheologiehilfsmitteln erhalten.

Typische Bereiche für die wesentlichen Bestandteile der Epoxy-Komponente A sind dabei:
40 bis 60 Gew.-%, vorzugsweise 15 bis 30 Gew.-% eines oder mehrerer flüssiger und/oder fester Epoxidharze ggf. mit einem Anteil an Epoxyfunktionellen Reaktivverdünner,
0 bis 45 Gew.-%, vorzugsweise 5 bis 30 Gew.-% eines oder mehrerer modifizierte(r) Epoxidharz(e),
5 bis 40 Gew.-%, vorzugsweise 10 bis 30 Gew.-% Füllstoffe, ggf. einschließlich der Rheologie-Hilfsmittel und weiteren Hilfs- und Zusatzstoffe, wobei sich die Summe der Bestandteile der Komponente A zu 100 % ergänzt.

Die Härterkomponente B enthält typischerweise die folgende Bestandteile:
30 bis 70 Gew.-%, vorzugsweise 40 bis 60 Gew.-%, der Aminhärterkomponente, besonders bevorzugt ein Polyaminoamid,
0,5 bis 10 Gew.-%, vorzugsweise 1 bis 5 Gew.-%, Beschleuniger,
30 bis 70 Gew.-%, vorzugsweise 40 bis 60 Gew.-%, Füllstoffe, ggf.
einschließlich der Rheologie-Hilfsmittel und weiteren Hilfs- und Zusatzstoffen, wobei sich die Summe der Bestandteile der Komponente B zu 100 % ergänzt.

Das Zumischen der flüssigen und pastösen Härterkomponente zur Epoxy-Komponente erfolgt dabei zweckmäßigerweise mit Hilfe eines statischen oder dynamischen Mischers unmittelbar vor der Auftragsdüse des ggf. an einen Auftragsroboter montierten Applikationssystems.

Die erfindungsgemäßen beschleunigten zweikomponentigen Epoxidharz-Klebstoffzusammensetzungen bauen bereits nach 1 bis 2 Stunden eine ausreichende Anfangsfestigkeit auf, wodurch die Klebstoffe auswaschbeständig sind und einen Bauteileverzug reduzieren. Außerdem können die Bauteile ohne Verschmutzungen transportiert werden, so daß diese Klebstoffe auch für sogenannte Anbauteile Verwendung finden können, die neben der eigentlichen Rohbauproduktionslinie gefertigt werden. Des weiteren können diese erfindungsgemäßen Klebstoffe im Reparaturbereich eingesetzt werden, sowie in der Endmontage oder im Spezialfahrzeugbau, in dem die typischen Prozeßwärmen des KTL-Ofens für die klassischen einkomponentigen hitzehärtenden Epoxidharz-Klebstoffe nicht zur Verfügung stehen.

Die erfindungsgemäßen Klebstoff-Zusammensetzungen lassen sich in ihrer Reaktionsgeschwindigkeit sehr leicht durch die Konzentration des Beschleunigers variieren, ohne daß die mechanischen Eigenschaften der ausgehärteten Klebung negativ beeinflußt würde. Die Klebstoffe enthalten keine Inhaltsstoffe, die arbeitshygienisch problematisch sind, da sie weder ätzend noch umweltgefährdend sind. Starker Amingeruch, wie er beim Einsatz niedermolekularer Amine als Härterkomponente bekannt ist, wird vermieden. Außerdem enthalten die Zusammensetzungen keine leicht flüchtigen Bestandteile, so daß die Klebstoffe auch für solche Bauteile eingesetzt werden können, die den KTL-Ofen durchlaufen müssen, ohne daß es zur Blasenbildung durch leicht flüchtige Bestandteile kommen würde.

Die nachfolgenden Beispiele sollen die Erfindung näher erläutern. Bei den Zusammensetzungen sind dabei alle Mengenangaben Gewichtsteile, wenn nicht anders angegeben.

### Beispiele

In einem Planetenmischer wurden bei Raumtemperatur die Komponenten A bzw. B der nachfolgend aufgeführten Zusammensetzungen bis zur Homogenität für 15 min separat gemischt und danach für weitere 15 min. im Vakuum weiter gemischt. Anschließend wurden die Komponenten A bzw. B separat in Vorratsbehälter abgefüllt.

Die Komponente A enthält Epoxid-Harze, Füllstoffe und ein Rheologiehilfsmittel, die Komponente B enthält ein Polyaminoamid, Füllstoffe und ein Rheologiehilfsmittel.

| Rezeptur Komponente A: | | | | | | |
|---|---|---|---|---|---|---|
| Standard Epoxidharz auf Basis Bisphenol A | | | | 60 % | | |
| Modifiziertes Epoxidharz auf Basis Bisphenol A | | | | 15 % | | |
| Anorganische Füllstoffe | | | | 22 % | | |
| Rheologiehilfsmittel | | | | 3 % | | |

| Rezeptur Komponente B: | B0 | B1 | B2 | B3 | B4 | B5 |
|---|---|---|---|---|---|---|
| Polyaminoamid | 60 % | 60 % | 60 % | 60 % | 60 % | 60 % |
| Anorganische Füllstoffe | 38 % | 37 % | 36 % | 35 % | 34 % | 33 % |
| Dicyandiamid | | 1 % | 2 % | 3 % | 4 % | 5 % |
| Rheologiehilfsmittel | 2 % | 2 % | 2 % | 2 % | 2 % | 2 % |

Für die Untersuchungen mit verschiedenen Gehalten an Dicyandiamid (B1 bis B5) wurde die Komponente B dahingehend verändert, daß ein Teil des Füllstoffes gegen die entsprechende Menge an Dicyandiamid gemäß obiger Tabelle ausgetauscht wurde.

### Untersuchung der Härtungszeiten:

Für die Bestimmung der Härtungszeiten wurde eine Rheologiemessung bei konstanter Temperatur durchgeführt. Als Methode diente ein Platte/Platte-Rotationsrheometer der Fa. Physica. Als Schergeschwindigkeit wurde 0,1 s-1 gewählt. Als Härtungszeit wurde das Überschreiten einer Viskosität von 100 kPa s festgelegt.

Die Komponente A wird mit der jeweiligen Komponente B im Gewichtsverhältnis 1 zu 1 gemischt und unmittelbar in das Meßsystem eingebracht.

| Härtungszeit bei 23°C | | Härtungszeit bei 60°C |
|---|---|---|
| B0 | 380 Minuten | 38 Minuten |
| B1 | 300 Minuten | 27 Minuten |
| B2 | 260 Minuten | 19 Minuten |
| B3 | 230 Minuten | 15 Minuten |
| B4 | 200 Minuten | 13 Minuten |
| B5 | 190 Minuten | 12 Minuten |

### Einfluß auf mechanische Eigenschaften:

Um den Einfluß auf die mechanischen Eigenschaften zu untersuchen wurde, der oben beschriebene 2K-Epoxid-Strukturklebstoff mit und ohne Gehalt an Dicyandiamid untersucht. Zur Bestimmung der Festigkeiten wurde die Zugscherprüfung nach DIN EN 1465 herangezogen. Als Prüfkörper dienten 0,8 mm starke, elektrogalvanisierte Stahlbleche, wie sie in der Automobilindustrie gebräuchlich sind. Die Komponente A wurde mit der jeweiligen Komponente B im Gewichtsverhältnis 1 zu 1 gemischt und auf die Prüfkörper aufgetragen. Die Verklebungsdicke wurde mit 0,3 mm Glaskugeln eingestellt. Die Prüfung erfolgte bei 23°C.

Geprüft wurden Prüfkörper, die nur bei Raumtemperatur (RT) gehärtet wurde und Prüfkörper nach 2 Stunden RT + 30 Minuten 180°C, wie sie beispielsweise an der Automobillinie vorkommen.

| ZSF | Härtung 3 Tage RT | Härtung 30 min 180°C |
|---|---|---|
| B0 | 16,3 MPa | 15,3 MPa |
| B3 | 15,9 MPa | 19,0 MPa |

Das Bruchbild war bei allen Prüfkörpern kohäsiv.

## Patentansprüche

1. Zweikomponentige Epoxidharz-Zusammensetzung enthaltend
A) eine Epoxy-Komponente enthaltend mindestens ein Epoxidharz mit einer Epoxy-Funktionalität größer als 1,
B) eine flüssige oder pastöse Härterkomponente enthaltend
a) Amine, Polyaminoamide, Mannich-Basen oder mercaptogruppenhaltige Verbindungen und
b) mindestens einen Beschleuniger ausgewählt aus der Gruppe Dicyandiamid, Guanamine, Guanidine, Aminoguanidine, feste aromatische Diamine oder deren Mischungen.

2. Epoxidharz-Zusammensetzung nach Anspruch 1, **dadurch gekennzeichnet, daß** die Epoxy-Komponente A mindestens ein Epoxidharz auf der Basis von Diglycidylethern des Bisphenols A enthält.

3. Epoxidharz-Zusammensetzung nach Anspruch 2 **dadurch gekennzeichnet, daß** die Epoxidharzkomponente A) zusätzlich mindestens ein modifiziertes Epoxidharz enthält, ausgewählt aus Umsetzungsprodukten von Epoxidharzen mit einer Epoxy-Funktionalität größer 1 mit carboxyfunktionellen Kautschuken, Dimersäuren und / oder Kern/Schale Polymeren, aminoterminierten Polyethern, Di- oder höherfunktionellen Aminen oder deren Mischungen, wobei das Epoxidharz in stöchiometrischen Überschuß eingesetzt wurde.

4. Epoxidharz-Zusammensetzung nach mindestens einem der vorhergehenden Ansprüche **dadurch gekennzeichnet, daß** die Epoxy-Komponente A) zusätzlich einen epoxyfunktionellen Reaktivverdünner enthält.

5. Epoxidharz-Zusammensetzung nach mindestens einem der vorhergehenden Ansprüche, **dadurch gekennzeichnet, daß** die Härterkomponente B) weitere Härtungsbeschleuniger ausgewählt aus substituierte Harnstoffen, tertiäre Aryl- oder Alkyl-Amine, Imidazolderivate oder deren Mischungen enthält.

6. Epoxidharz-Zusammensetzung nach mindestens einem der vorhergehenden Ansprüche, **dadurch gekennzeichnet, daß** die Epoxy-Komponente A) und /oder die Härterkomponente B) zusätzlich Weichmacher, Haftvermittler, Rheologie-Hilfsmittel, Füllstoffe, Netzmittel und/oder Alterungsschutzmittel und/oder Stabilisatoren enthält.

7. Epoxidharz-Zusammensetzung nach mindestens einem der vorhergehenden Ansprüche, **dadurch gekennzeichnet, daß** die Härterkomponente B) aliphatische oder aromatische, bei Raumtemperatur flüssige Di- oder Polyamine, di- oder trifunktionelle aminoterminierte Polyether, di- oder polyfunktionelle Polybutadiene oder Polyisoprene, Polyaminoamide, Mannich-Basen, Polymercaptane oder deren Mischungen enthält.

8. Verwendung der Epoxidharz-Zusammensetzung nach mindestens einem der vorhergehenden Ansprüche als Klebstoff im Rohbau der Fahrzeugfertigung, im Gerätebau oder zur Reparatur von Fahrzeugen.

9. Verfahren zum Kleben von Karosseriebauteilen, **gekennzeichnet durch** die folgenden wesentlichen Verfahrensschritte:
a) Mischen der Epoxy-Komponente A) nach mindestens einem der vorhergehenden Ansprüche mit der Härterkomponente B) in einem Verhältnis innerhalb der stöchiometrisch erforderlichen Menge,
b) Auftragen der Mischung auf mindestens eine zu klebende Substratoberfläche,
c) Fügen der Bauteile, gefolgt von der Teilhärtung des Klebstoffgemischs bei Raumtemperatur,
d) Ggf. Durchführen weiterer Fertigungsschritte wie Reinigen, Phosphatieren, Lackieren,
e) Ggf. beschleunigtes Aushärten der Klebung **durch** Erwärmen der Bauteile auf 40°C bis 150°C, vorzugsweise auf 50°C bis 80°C für 10 bis 60 min.

10. Verfahren nach Anspruch 9, **dadurch gekennzeichnet, daß** das Mischungsverhältnis der Harz- und Härterkomponente A) und B) gemäß Schritt a) 50 : 1 bis 0,5 : 1, vorzugsweise 1 : 1 beträgt.
